# EUROPÄISCHE PATENTANMELDUNG

(11) **EP 1 059 184 A2**
(43) Veröffentlichungstag der Anmeldung: **13.12.2000**
(21) Anmeldenummer: 00103477.6
(22) Anmeldetag: 01.03.2000
(51) Int. Cl.: B60J 7/12, B60J 1/18

(54) **Anordnung zur Befestigung eines Randbereiches einer Fahrzeuginnenverkleidung an einem flexiblen Verdeck**

(30) Priorität: 10.06.1999 DE 19926484
(71) Anmelder: MEHLER VARIO SYSTEM GmbH, 36103 Flieden (DE)
(72) Erfinder: Brunstein, Heinrich, 63829 Krombach (DE); Manns, Johannes, 36103 Flieden (DE)
(74) Vertreter: HOFFMANN - EITLE

(57) **Zusammenfassung**

Die vorliegende Erfindung betrifft eine Anordnung zur Befestigung eines Randbereiches einer Fahrzeuginnenverkleidung (7) von einem flexiblen Verdeck (1), wie einem Cabrioletverdeck. In dem Randbereich der Fahrzeuginnenverkleidung (7) ist ein Formteil (10) vorgesehen, das mit der Fahrzeuginnenverkleidung (7) über ein zwischen den Rändern des Formteils (10) angeordnetes Verbindungselement (9) mit dem Verdeckstoff (4) verbunden ist, so daß der Randbereich der Fahrzeuginnenverkleidung (7) bei einem Spannen der Fahrzeuginnenverkleidung (7) an den Befestigungsbereich (8) des Verdecks (1) beispielsweise mit einem Heckfenster (3) klappt.

## Beschreibung

### Technisches Gebiet

Die Erfindung betrifft eine Anordnung zur Befestigung eines Randbereiches einer Fahrzeuginnenverkleidung an einem flexiblen Verdeck, insbesondere einem flexiblen Falt- oder Klappverdeck eines Fahrzeugs, mit einem Formteil, das mit dem Randbereich der Fahrzeuginnenverkleidung fest verbunden ist, sowie einem Verbindungselement, über das das Formteil an dem Verdeck befestigt ist.

Bei Cabrioletverdecks wird die dem Fahrzeuginnenraum zugewandte Seite des Verdecks üblicherweise mit einer Fahrzeuginnenverkleidung ausgestattet, um zum einen eine verbesserte Isolierung gegenüber Lärm und Temperatur zu gewährleisten, und zum anderen um den Fahrzeuginnenraum ansprechender zu gestalten.

### Stand der Technik

Bei der Befestigung der Fahrzeuginnenverkleidung ist häufig der Randbereich der Fahrzeuginnenverkleidung, der mit einem Befestigungsbereich des Verdecks verbunden werden muß, problematisch. Derartige Randbereiche sind beispielsweise beim Übergang zu dem Heckfenster, den Seitenfenstern oder bei der Befestigung an Spriegeln oder Fahrzeugsäulen vorhanden.

Eine aufwendige Befestigungsmöglichkeit zeigt beispielsweise die DE 43 41 079. Bei dieser bekannten Konstruktion ist eine aus zwei Rahmenteilen bestehende Rahmenkonstruktion vorgesehen. Die beiden Rahmenteile sind über eine Anzahl von Schrauben miteinander verbunden, wodurch eine solide Klemmverbindung geschaffen wird, die sowohl den Randbereich des Verdeckes als auch den Randbereich der Innenverkleidung mit den Befestigungsmitteln der Scheibe fest miteinander verbindet. Um einen Abstand der Innenverkleidung zu den Schrauben herzustellen und damit Scheuerstellen zu vermeiden, ist der Randbereich der Innenverkleidung mit einem Formteil verbunden, das über die Schrauben an den Rahmenteilen und damit an dem Verdeck befestigt ist.

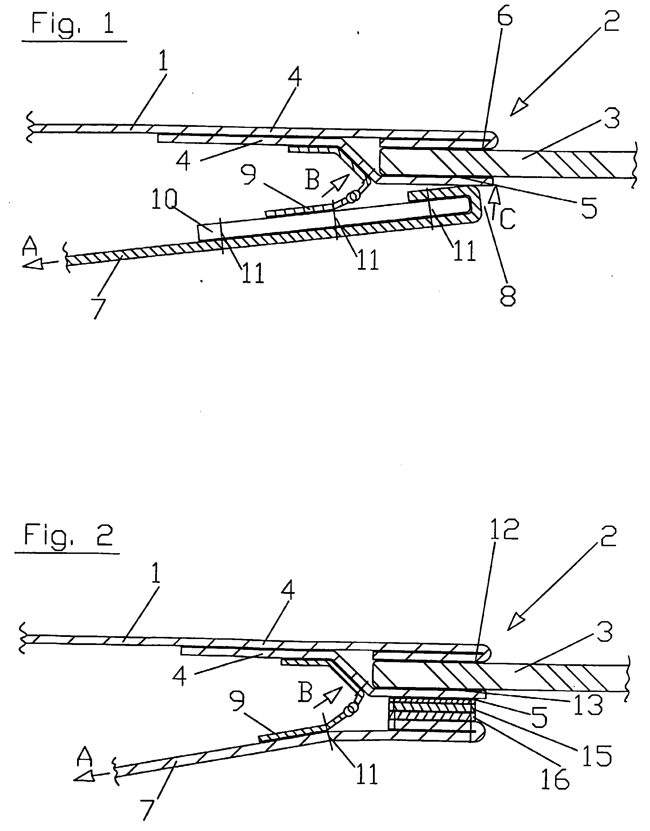

Bei einer weiteren bekannten Befestigungsmöglichkeit, wie sie in Fig. 2 der vorliegenden Patentanmeldung (der vorliegenden Patentschrift) dargestellt ist, wird der Übergang zwischen dem Verdeck 1 und der Fensterscheibe 3 beispielsweise über eine Klebeverbindung 12, 13 und/oder über einen Reißverschluß 9 realisiert. In diesem Bereich umschließt der Verdeckstoff 4 den Fensterrand von beiden Seiten, um eine möglichst gute Abdichtung des Heckfensters 3 zu ermöglichen. Auf den Verdeckstoff 4, der dem Fahrzeuginneren zugewandt ist, wird im Bereich des Fensterrandes ein Klettband 15 aufgeklebt. Die Befestigung der Fahrzeuginnenverkleidung 7 erfolgt dann, indem auf die zur Fahrzeugaußenseite weisende Seite der Fahrzeuginnenverkleidung 7 ein Filzband 16 aufgeklebt wird, das dann manuell mit dem Klettband 15 des Verdecks 1 zu einer Klettverbindung zusammengefügt wird.

Das Einkleben von Filzband 16 und Klettband 15 erfolgt in der Regel von Hand nachdem das Heckfenster 3 bereits mit dem Verdeck 1 verbunden ist. Zusätzlich wird die Fahrzeuginnenverkleidung 7 meist durch einen Reißverschluß 9 mit dem äußeren Verdeckstoff 4 verbunden, um ein rasches Auswechseln der Heckscheibe 3 zu ermöglichen. Dieser Reißverschluß 9 ist von der Fensterscheibe 3 beabstandet, um eine unnötige Materialverdickung im Befestigungsbereich 2 der Heckscheibe 3 zu vermeiden.

Die Klettverbindung 15, 16 zwischen Fahrzeuginnenverkleidung 7 und Verdeck 1 soll also lediglich eine optisch ansprechende und saubere Abschlußverbindung zwischen Fahrzeuginnenverkleidung 7 und Verdeck 1 sicherstellen. Das Anbringen von Klettband 15 und Filzband 16, sowie die anschließende Klettverbindung zwischen Klettband und Filzband ist zeit- und arbeitsintensiv. Da diese Verbindung derzeit manuell ausgeführt wird, treten in diesem Bereich auch häufig Unregelmäßigkeiten auf, wodurch die Verarbeitung unsauber erscheint. In ähnlicher Weise wird die Verbindung zwischen Fahrzeuginnenverkleidung 7 und Verdeck 1 auch bei anderen Übergangsbereichen von dem Verdeck zu den Seitenscheiben oder Spriegeln oder Säulen realisiert.

### Darstellung der Erfindung

Der vorliegenden Erfindung liegt das technische Problem zugrunde, eine Befestigung eines Randbereiches der Fahrzeuginnenverkleidung von einem flexiblen Verdeck im Befestigungsbereich des Verdecks bereitzustellen, die einerseits hohen optischen Anforderungen entspricht und andererseits mit geringem Fertigungs- und Arbeitsaufwand realisiert werden kann.

Diese Aufgabe wird mit einer Anordnung zur Befestigung eines Randbereiches einer Fahrzeuginnenverkleidung mit den Merkmalen von Patentanspruch 1 gelöst.

Der Erfindung liegt der Gedanke zugrunde, daß eine optisch ansprechende Befestigung einer Fahrzeuginnenverkleidung an einem Befestigungsbereich eines Verdecks dadurch realisiert werden kann, daß ein definierter Randbereich der Fahrzeuginnenverkleidung überlappend an den Befestigungsbereich des Verdecks geklappt wird. Besonders einfach und zeitsparend wird die Befestigung des Randbereichs der Fahrzeuginnenverkleidung an dem Befestigungsbereich des Verdecks realisiert, indem der Randbereich der Fahrzeuginnenverkleidung automatisch beim Spannen der Fahrzeuginnenverkleidung angeklappt wird. Dieses Anklappen wird dadurch erreicht, daß der Randbereich der Fahrzeuginnenverkleidung fest mit einem Formteil verbunden wird, und das Formteil bzw. die Fahrzeuginnenverkleidung über ein im Bereich des Formteils angeordnetes Verbindungselement an dem Verdeck befestigt ist. Auf diese Weise wirkt das im Vergleich zur Fahrzeuginnenverkleidung relativ steife Formteil mit dem Verbindungselement in der Art eines Schwenkhebels zusammen, da die in der Ebene der Innenverkleidung (Innenhimmel) wirkende Kraft durch das Verbindungselement mit einer Kraft aufgenommen wird, die eine aus der Ebene der Innenverkleidung weisende Komponente aufweist, so daß der Randbereich der Fahrzeuginnenverkleidung beim Spannen der Fahrzeuginnenverkleidung automatisch gegen den Befestigungsbereich des Verdecks gedrückt wird.

Um einen optisch besonders ansprechenden Übergang von der Fahrzeuginnenverkleidung zu dem Befestigungsbereich des Verdecks zu gewährleisten, wird das Formteil zumindest teilweise durch die Fahrzeuginnenverkleidung umhüllt. So entsteht eine definierte Begrenzungslinie der Fahrzeuginnenverkleidung, die den Befestigungsbereich des Verdecks überlappen kann, um einen sauberen Abschluß des Verdecks zum Fahrzeuginnenraum zu bilden. Die Verbindung zwischen dem Formteil und der Fahrzeuginnenverkleidung kann durch Verkleben, Verschweißen, eine Nietverbindung oder Vernähen erfolgen. Vorzugsweise ist das Formteil im wesentlichen streifenförmig ausgebildet, um eine unnötige Materialverdickung im Befestigungsbereich des Verdecks zu vermeiden.

Um das Heranklappen des Randbereichs der Fahrzeuginnenverkleidung mit dem Formteil an den Befestigungsbereich des Verdecks sicher gewährleisten zu können, muß das Formteil eine gewisse Steifigkeit aufweisen, die vorzugsweise über der Steifigkeit liegt, die das üblicherweise verwendete Gewebe einer Fahrzeuginnenverkleidung aufweist. Bevorzugte Materialien des Formteils sind daher beispielsweise Kunststoff, Pappe oder Metallbleche. Eine ausreichende Steifigkeit verbunden mit einer guten Haltbarkeit des Formteilmaterials kann beispielsweise mit Polyethylen erzielt werden. Zusätzlich weist die Verwendung von Polyethylen als Formteilmaterial den Vorteil auf, daß ein Polyethylenformteil gut mit der Fahrzeuginnenverkleidung vernähbar ist. Das Formteil kann als ein im wesentlichen zweidimensional geformtes Bauteil, beispielsweise durch Ausstanzen oder -schneiden aus einem flächigen Ausgangsmaterial hergestellt werden oder, beispielsweise durch Gießen, im wesentlichen dreidimensional geformt werden.

Teilweise werden die Übergänge des Fahrzeugverdecks zu Komponenten wie dem Heckfenster, Seitenfenstern, Spriegeln oder Fahrzeugsäulen lösbar gestaltet, um einerseits ein Zusammenfalten oder -klappen des Verdecks zu ermöglichen, oder andererseits derartige Komponenten leicht austauschen zu können. In diesem Fall muß der Befestigungsbereich des Verdecks gut zugänglich sein, so daß auch die Fahrzeuginnenverkleidung zumindest in diesem Bereich lösbar gestaltet sein muß. Erfindungsgemäß wird dies durch das Vorsehen von einem Reißverschluß als Verbindungselement realisiert, der ein schnelles und sicheres Lösen und Wiederverbinden der Fahrzeuginnenverkleidung mit dem Verdeck ermöglicht. Das Verbindungselement muß aber nicht grundsätzlich lösbar sein, bei entsprechender Verwendung kann das Verbindungselement den Verdeckstoff auch fest mit der Fahrzeuginnenverkleidung bzw. dem Formteil verbinden.

Vorzugsweise wird das Verbindungselement zusammen mit dem Formteil an der Fahrzeuginnenverkleidung befestigt. Hier kommen beispielsweise eine Befestigung durch Vernähen, Verkleben, Verschweißen und/oder eine Nietverbindung in Frage.

### Kurze Beschreibung der Zeichnungen

Im folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigt:
- Fig. 1: eine schematische Schnittansicht durch einen Befestigungsbereich eines Verdecks gemäß der vorliegenden Erfindung; und
- Fig. 2: eine schematische Schnittansicht durch einen Befestigungsbereich eines Verdecks nach dem Stand der Technik.

### Beschreibung eines Ausführungsbeispiels der Erfindung

In Fig. 1 ist der Befestigungsbereich 2 eines Verdecks 1 in einer Schnittansicht schematisch dargestellt. Das in Fig. 1 gezeigte Ausführungsbeispiel zeigt die Befestigung einer Heckscheibe 3 an einem Verdeckstoff 4. Der Verdeckstoff 4 ist dabei über Verklebungen 5 und 6 beidseitig mit der Heckscheibe 3 verbunden. Das Verdeck 1 ist auf der dem Fahrzeuginnenraum (unten in Fig. 1) zugewandten Seite mit einer Fahrzeuginnenverkleidung 7 verkleidet. Die Fahrzeuginnenverkleidung 7 überdeckt dabei mit ihrem Randbereich 8 den Bereich, in dem der Verdeckstoff 4 über die Verklebung 5 mit der Heckscheibe 3 verbunden ist. Die Fahrzeuginnenverkleidung 7 ist über einen Reißverschluß 9 mit dem Verdeckstoff 4 verbunden. Im Randbereich 8 der Fahrzeuginnenverkleidung 7 ist ein Formteil 10 vorgesehen, das über Nähte 11 fest mit der Fahrzeuginnenverkleidung verbunden ist. Auch die der Fahrzeuginnenverkleidung 7 zugewandte Seite des Reißverschlusses 9 ist über die Nähte 11 sowohl mit dem Formteil 10 als auch mit der Fahrzeuginnenverkleidung 7 verbunden. Der Befestigungsbereich des Reißverschlusses 9 an dem Formteil 10 bzw. der Fahrzeuginnenverkleidung 7 liegt zwischen den Rändern des Formteils 10.

Bei der Verbindung des Verdecks 1 mit der Heckscheibe 3 wird zunächst der Verdeckstoff 4 über die Verklebungen 5 und 6 mit der Heckscheibe 3 verbunden. Anschließend wird die Fahrzeuginnenverkleidung 7 über den Reißverschluß 9 mit dem Verdeckstoff 4 verbunden.

Wird nun das Verdeck 1 und damit auch die Fahrzeuginnenverkleidung 7 gespannt, dann wirkt auf die Fahrzeuginnenverkleidung 7 eine Zugkraft, die durch den Pfeil A in Fig. 1 dargestellt ist. Diese Zugkraft wird über die Verbindung mit dem Reißverschluß 9 von einer Haltekraft des Verdeckstoffs 4 aufgenommen, die durch Pfeil B in Fig. 1 dargestellt ist. Durch die Kraftkomponente der Haltekraft des Reißverschlusses 9, die aus der Ebene der Fahrzeuginnenverkleidung 7 gerichtet ist, wird das Formteil 10 zu einer Schwenkbewegung in Richtung des Pfeiles C in Fig. 1 veranlaßt. Auf diese Weise klappt der Randbereich 8 der Fahrzeuginnenverkleidung 7 mit dem Formteil 10 gegen den Befestigungsbereich 2, indem der Verdeckstoff 4 über die Verklebung 5 mit der Heckscheibe 3 verbunden ist. Der Randbereich 8 der Fahrzeuginnenverkleidung 7 wird so automatisch durch das Spannen des Verdecks 1 über dem Befestigungsbereich 2 in Anlage gebracht, so daß eine durch das Formteil 10 vorgegebene glatte und optisch ansprechende Abschlußkante im dem Fahrzeuginnenraum zugewandten Übergangsbereich zwischen Verdeck 1 und Heckscheibe 3 geschaffen wird.

Ein ähnlicher Abschluß der Fahrzeuginnenverkleidung 7 mit einer Fahrzeugkomponente, wie beispielsweise einem Seitenfenster, Spriegeln oder Fahrzeugsäulen kann in gleicher Weise, wie oben rein beispielhaft für eine Heckscheibe 3 erläutert, realisiert werden.

Die Verbindung zwischen Fahrzeuginnenverkleidung 7 und Verdeck 1 muß dabei nicht, wie in dem Ausführungsbeispiel der vorliegenden Erfindung erläutert, über einen Reißverschluß 9 realisiert werden, sondern kann auf gleiche Weise durch eine ähnlich wirkende lösbare Verbindung oder durch eine unlösbare Verbindung erzielt werden.

Die Verbindung zwischen dem Formteil 10 und der Fahrzeuginnenverkleidung 7 kann ergänzend zu der Naht 11 oder alternativ zu der Naht 11 durch eine Verklebung erfolgen. Auch die Verbindung zwischen dem Reißverschluß 9 oder einem ähnlichen Bauteil, und der Fahrzeuginnenverkleidung 7 bzw. dem Formteil 10 kann zusätzlich oder alternativ zu der Verbindung über die Nähte 11 über eine Verklebung, eine Nietverbindung oder ähnliches erfolgen.

## Patentansprüche

1. Anordnung zur Befestigung eines Randbereiches einer Fahrzeuginnenverkleidung an einem flexiblen Verdeck, insbesondere einem flexiblen Falt- oder Klappverdeck eines Fahrzeugs,
- mit einem Formteil, das mit dem Randbereich (8) der Fahrzeuginnenverkleidung (7) fest verbunden ist, sowie
- einem Verbindungselement (9), über das das Formteil (10) an dem Verdeck (1) befestigt ist,
**dadurch gekennzeichnet**, **daß**
das Formteil (10) aus einem steiferen Material besteht als die Fahrzeuginnenverkleidung (7) und mit dem Verbindungselement in der Art eines Schwenkhebels derart zusammen wirkt, daß beim Spannen der Fahrzeuginnenverkleidung der Randbereich der Innenverkleidung gegen den Befestigungsbereich des Verdecks gedrückt wird.

2. Anordnung nach Anspruch 1,
dadurch **gekennzeichnet**, daß
das Formteil (10) im wesentlichen streifenförmig ist.

3. Anordnung nach Anspruch 1 oder 2,
dadurch **gekennzeichnet**, daß
das Formteil (10) aus einem Kunststoff besteht.

4. Anordnung nach einem der vorangegangenen Ansprüche,
dadurch **gekennzeichnet**, daß
das Formteil (10) aus Polyethylen besteht.

5. Anordnung nach einem der vorangegangenen Ansprüche,
dadurch **gekennzeichnet**, daß
das Verbindungselement (9) die Fahrzeuginnenverkleidung (7) nicht lösbar mit dem Verdeck (1) verbindet.

6. Anordnung nach einem der Ansprüche 1 bis 4,
dadurch **gekennzeichnet**, daß
das Verbindungselement (9) die Fahrzeuginnenverkleidung (7) lösbar mit dem Verdeck (1) verbindet.

7. Anordnung nach Anspruch 6,
dadurch **gekennzeichnet**, daß
das Verbindungselement (9) ein Reißverschluß ist.

8. Anordnung nach einem der vorangegangenen Ansprüche,
dadurch **gekennzeichnet**, daß
das Formteil (10) mit der Fahrzeuginnenverkleidung (7) verklebt ist.

9. Anordnung nach einem der vorangegangenen Ansprüche,
dadurch **gekennzeichnet**, daß
das Formteil (10) mit der Fahrzeuginnenverkleidung (7) vernäht ist.

10. Anordnung nach einem der vorangegangenen Ansprüche,
dadurch **gekennzeichnet**, daß
das Verbindungselement (9) mit dem Formteil (10) und der Fahrzeuginnenverkleidung (7) schwenkbar durch Vernähen, Verkleben, Verschweißen und/oder durch eine Nietverbindung verbunden ist.

11. Anordnung nach einem der vorangegangenen Ansprüche,
dadurch **gekennzeichnet**, daß
das Formteil (10) zumindest teilweise von der Fahrzeuginnenverkleidung (7) umhüllt wird.
